# EUROPÄISCHE PATENTSCHRIFT

(11) **EP 0 617 218 B1**
(45) Veröffentlichungstag und Bekanntmachung des Hinweises auf die Patenterteilung: **24.05.2000**
(21) Anmeldenummer: 94103461.3
(22) Anmeldetag: 08.03.1994
(51) Int. Cl.: F16L 5/14, G05D 23/12, F25B 41/06

(54) **Leitungsanschluss, insbesondere für mindestens eine Kapillarrohr-Leitung**
Pipe connection, in particular for at least one capillary tube
Raccordement pour tuyaux, notamment pour au moins un tube capillaire

(30) Priorität: 23.03.1993 DE 4309238
(43) Veröffentlichungstag der Anmeldung: 28.09.1994
(73) Patentinhaber: E.G.O. Italiana S.p.A., I-28100 Novara/Veveri (IT)
(72) Erfinder: Hikl, Dieter, D-75056 Sulzfeld (DE)
(74) Vertreter: Patentanwälte Ruff, Beier, Schöndorf und Mütschele

(56) Entgegenhaltungen:
- EP-A- 0 446 429
- US-A- 3 654 965
- US-A- 4 181 330

## Beschreibung

Die Erfindung betrifft einen Leitungsanschluß nach dem Oberbegriff des Patentanspruchs 1. Dabei sind eine, zwei oder mehr Leitungen an einen Grundkörper, z.B. eine Platte, so angeschlossen, daß sie von der Außenseite dieses Grundkörpers wegführen und an seiner Innenseite eine Anschlußverbindung bilden.

Derartige Leitungen können Signalleitungen, Versorgungsleitungen, Justierleitungen und ähnliche Anschlußleitungen sein, wobei mindestens eine bis alle Leitungen zweckmäßig im wesentlichen nicht zur elektrischen Leitung bzw. zur Leitung von Energiewellen vorgesehen, sondern solche Leitungen sind, die im wesentlichen im Abstand innerhalb des Außenumfanges des eigentlichen Leitungsstanges das zu leitende Medium aufnehmen, wie das z.B. bei Rohrleitungen der Fall ist. Bevorzugt ist der Leitungsanschluß für sehr feine Leitungen mit einer Außenweite von unter 50, 20, 10 oder sogar 5 mm vorgesehen, die auch höchstens 2 bzw. 1 mm betragen kann, wobei ihre Wandungsdicke unter 1 mm bzw. in der Größenordnung von wenigen zehntel Milimetern liegt.

Solche Leitungsanschlüsse sind auch bei Temperatur-Fühleranordnungen vorgesehen, die nach der EP-A-0 578 096 ein hydraulisch geschlossenes Ausdehnungssystem mit zwei Endeinheiten, nämlich einem Temperaturfühler und einem Stellglied bilden, welche gegeneinander flexibel und/oder elastisch beweglich nur über mindestens eine der Leitungen miteinander verbunden sind, so daß ein von einer Endeinheit aufgenommenes Signal über die Fernleitung zu einer von der anderen Endeinheit beeinflußten Steuereinheit, z.B.einem manuell auf unterschiedliche Temperaturwerte einstellbaren Bedienungsregler, weitergeleitet werden kann.

Zahlreiche Systeme benötigen Leitungsanschlüsse für gesonderte Verbindungsleitungen, z.B. um gesonderte Endeinheiten mit einer gemeinsamen Endeinheit zu verbinden oder um nur für die Herstellung erforderliche Anschlüsse vorzusehen, die nach der Herstellung dann als Blindanschlüsse verschlossen sind. Z.B. ist bei einem Fluidsystem neben der Funktions-bzw. Signalleitung ein Füllanschluß zweckmäßig, über welchen das System gefüllt bzw. justiert und dann nach außen druckdicht verschlossen werden kann. Sind hierfür an einem Grundkörper gesonderte Anschlüsse vorgesehen, so kann sich eine verhältnismäßig aufwendige Herstellung, eine erhöhte Gefahr von Undichtigkeiten, ein geringerer mechanischer Schutz der weit auseinander frei liegenden Anschlußabschnitte oder dergl. ergeben und der Grundkörper benötigt eine der Anzahl der Anschlüsse entsprechende Anzahl von Durchbrüchen

Der Erfindung liegt die Aufgabe zugrunde, einen Leitungsanschluß der genannten Art zu schaffen, bei welchem Nachteile bekannter Ausbildungen bzw. der beschriebenen Art vermieden sind und der insbesondere bei kompakter Ausbildung und hoher Anschlußgüte eine vereinfachte Herstellung gewährleistet.

Erfindungsgemäß sind die Merkmale nach Patentanspruch 1 vorgesehen. Zwei oder mehr Anschlüsse können so zusammengelegt werden, daß für sie im wesentlichen nur eine einzige Anschlußöffnung erforderlich ist, die im Bereich des Grundkörpers im wesentlichen zentrisch symmetrisch bzw. kreisrund oder zylindrisch sein kann. Anstatt eine Leitung außerhalb des Grundkörpers, des Anschlußflansches und/oder Anschlußabschnittes als von einer weiteren Leitung abzweigende Leitung oder zwei Anschlußabschnitte etwa koaxial ineinander liegend vorzusehen, liegen zweckmäßig mindestens zwei Anschlußabschnitte nahe benachbart nebeneinander, wobei sie in gesonderte Anschlußöffnungen eingreifen, die abgesetzt in eine axial anschließende gemeinsame bzw. erweiterte Anschlußöffnung übergehen. Die Leitungen können dadurch in einem dem Anschlußflansch zugehörigen Längsbereich durch Zwischenglieder vollständig voneinander getrennt sein und in mindestens einem anschließenden Längsbereich mit einem Spaltabstand einander frei und ohne weitere Zwischenbegrenzung gegenüberliegen. Von diesem Längsabschnitt können die Anschlußabschnitte eigensteif frei vorstehen.

Für mindestens zwei benachbarte Anschlußabschnitte sind zweckmäßig im wesentlichen gesonderte, hülsenartige und formstabile Aufnahmetüllen vorgesehen, die jedoch zweckmäßig statt als gesonderte Bauteile im wesentlichen einteilig miteinander und/oder mit dem Grundkörper bzw. als feste Einheit ausgebildet sind und von dem Grundkörper statt in entgegengesetzten Richtungen im wesentlichen nur in einer einzigen Richtung frei vorstehen.

Ist der jeweilige Anschlußabchnitt gegenüber der Anschlußöffnung mit einem Sicherungsglied, z.B. einem Haftstoff, gesichert, so ist es zweckmäßig, die durch den Anschlußflansch bzw. den Grundkörper gebildete Begrenzung der Anschlußöffnung in den Spalt zwischen den Anschlußabschnitten hineinragen zu lassen, um diesen Bereich nicht mit einem entsprechend großen Volumen des Sicherungsgliedes ausfüllen zu müssen. Der Haftstoff kann dadurch in diesem und/oder in allen übrigen Bereichen im wesentlichen nur in kapillarfeinen Mikrospalten in sehr geringer Menge vorgesehen sein. Durch die Zusammenlegung zweier Anschlüsse wird auch die Genauigkeit der Fühlfunktion des Fühlers erhöht, insbesondere wenn sich die Anschlüsse etwa im Zentrum des Grundkörpers bzw. im Abstand innerhalb von dessen Außenumfangskante befinden. Der Grundkörper kann als Ringplatte mit nur einem einzigen Durchbruch ausgebildet sein.

Nach einem weiteren Merkmal der Erfindung bildet der jeweilige Anschlußabschnitt eine Werkzeug-Innenform zur Formgebung der Anschlußmittel, insbesondere des Anschlußflansches bzw. des Sicherungsgliedes, so daß hierfür kein gesondertes Werkzeug benötigt wird, sondern nur an der Außenseite des eigensteif formstarren Anschlußflansches angreifende Gegenwerkzeuge erforderlich sind, die den Anschlußflansch um den jeweiligen Anschlußabschnitt herum bzw. zwischen benachbarte Anschlußabschnitte hineinformen. Dadurch wird dann zwischen den Anschlußabschnitten ein formsteifes und im Gefüge verdichtetes Zwischen- bzw. Distanzglied geschaffen, das die Anschlußabschnitte stegartig verbindet und gegenüber den Mantelabschnitten der jeweiligen Anschlußhülse etwa doppelte Dicke hat, weil es zweilagig ist. Ein zunächst etwa zentrisch-symmetrischer bzw. zylindrischer Hülsenabschnitt wird wenigstens auf einem Teil seiner Länge durch nur an geringen Teilen seines Außenumfanges angreifenden, radial nach innen gerichteten Druck unter plastischer Kaltverformung entlang etwa axialer Mantellinien verformt bzw. gequetscht und dadurch gegebenenfalls in annähernd radialspielfreie bzw. reibungsschlüssige Verbindung mit dem zugehörigen Anschlußabschnitt gebracht. Ein Haftmittel kann dabei bereits in Form einer dünnen Schicht, z.B. einer Paste, wie einer Lötpaste am Innenumfang des Anschlußflansches angebracht worden sein, so daß sich eine sehr feine, filmartige und gleichmäßige Verteilung dieses plastischen Haftmittels ergibt, das danach, z.B. durch vorangehende Erwärmung, erstarrt und eine völlig geschlossene bzw. druckdichte Abdichtung nicht nur im Bereich des Außenumfanges des jeweiligen Anschlußabschnittes, sondern auch zwischen benachbarten Anschlußabschnitten bildet.

Auch unabhängig von der beschriebenen Ausbildung kann ein gemeinsamer Anschlußflansch eine Leitung und eine Halterung tragen, die die Leitung im Abstand vom zugehörigen Ende des Anschlußflansches stützt und z.B. stabförmig frei vorsteht. Dadurch ergibt sich ein sehr geringer Querabstand zwischen Leitung und Halterung, so daß die Leitung bereits unmittelbar im Anschluß an den Anschlußflansch durch sehr nahe Lage zur Haltung gut gegen Beschädigungen abgeschirmt bzw. geschützt ist. Anstatt die Halterung einteilig mit dem Anschlußflansch auszubilden, kann sie auch durch einen gesonderten Bauteil, nämlich z.B. durch einen gegenüber der gestützten Leitung dickeren Stab, gebildet sein.

Ebenfalls unabhängig von der beschriebenen Ausbildung kann ein Anschlußflansch eine Sicherung für einen im wesentlichen nur außerhalb des Grundkörpers liegenden bzw. den Grundkörper nicht durchsetzenden Bauteil tragen, z.B. eine Lagesicherung, eine Zentrierung, eine Abschirmung, eine Abdichtung oder dergleichen, welche über das eng bzw. abgedichtet anliegende Ende des Anschlußflansches vorsteht und/oder gegenüber dem Außenumfang der jeweiligen Leitung im wesentlichen völlig berührungsfrei sein kann. Dieses Sicherungsglied kann auch als gesonderter Bauteil mit dem Anschlußflansch verbunden, z.B. durch Aufstecken am Außenumfang und/oder durch Einstecken zwischen den Lagen des Distanzgliedes am Innenumfang des Anchlußflansches befestigt sein.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbespiel der Erfindung ist in den Zeichnungen dargestellt und wird im folgenden näher erläutert:

In den Zeichnungen zeigen:
- Figur 1: eine mit einem erfindungsgemäßen Leitungsanschluß versehene Baugruppe, teilweise im Schnitt.
- Figur 2: einen Ausschnitt der Figur 1 in wesentlich vergrößerter und abgewandelter Ausbildung und

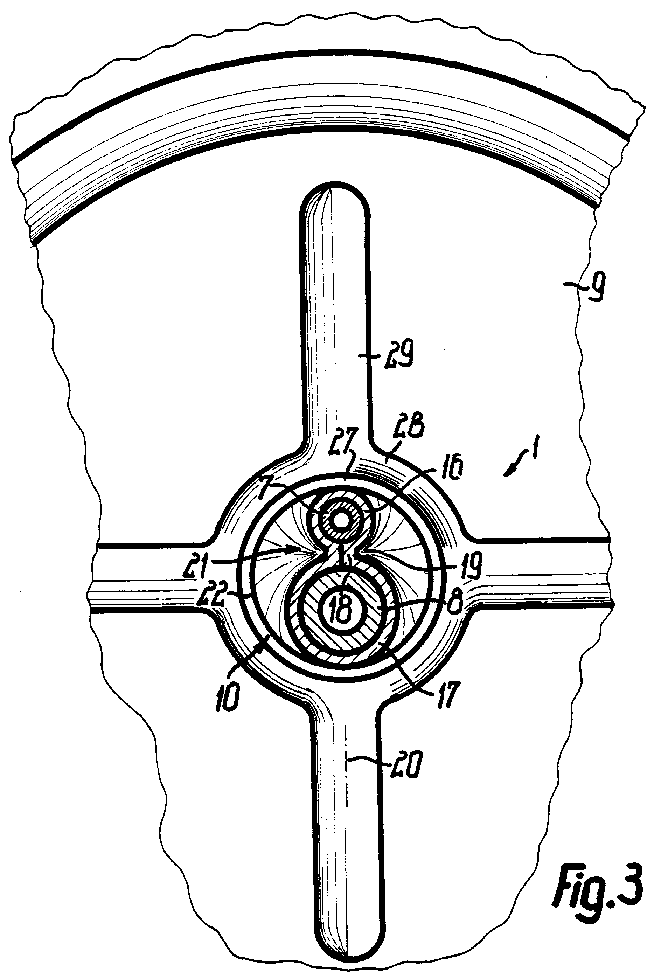

- Figur 3: einen Ausschnitt der Figur 1 in geschnittener Ansicht von unten.

Der Leitungsanschluß 1 ist an einer geschlossenen Montage- bzw. Baugruppe 2 vorgesehen, die zwei kopfartige Einheiten 3, 4 aufweist, welche über eine einzige, demgegenüber wesentlich schlankere Kapillarrohr-Leitung 5 miteinander verbunden und an eine ebenfalls im wesentlich schlankere Füll-Leitung 6 anschlossen sind, deren Füllende frei zugänglich an der Außenseite der Einheit 3 liegt, jedoch ab dem Füllvorgang dicht verschlossen gehalten ist. Die Einheit 3 bildet einen gehäuse- bzw. knopfförmigen Temperaturfühler, der aus nur zwei einteiligen Bauteilen zusammengesetzt ist und an den die jeweilige Leitung 5 bzw. 6 mit einem im wesentlichen geradlinigen Anschlußabschnitt 7 bzw. 8 so angeschlossen ist, daß sie frei in das Gehäuseinnere mündet bzw. ragt, wobei der Anschluß durch den Leitungsanschluß 1 erfolgt.

Dieser ist an einem ringplattenförmigen Grundkörper 9 vorgesehen, welcher einen wenigstens teilweise hülsenförmigen Anschlußflansch 10 einteilig trägt. Eine Mittelachse 11 dieses Anschlußflansches 10 fällt etwa mit der Mittelachse des Grundkörpers 9 bzw. der Einheit 3 zusammen, während die beiden Achsen 12, 13 der Anschlußabschnitte 7, 8 beiderseits benachbart zur Achse 11 liegen, nämlich die Achse 12 des Anschlußabschnittes 7 in einem größeren Abstand als die andere Achse 13, so daß die Achse 11 etwa in eine Mantellinie des Anschlußabschnittes 8 liegt oder dessen Außenumfang demgegenüber geringfügig zur Achse 12 vorsteht. Die Bauteile 9, 10 bestehen aus einem Werkstoff, der unter solchen Drücken bzw. Temperaturen umformbar ist, die beim Betrieb nicht auftreten, so daß die Bauteile unter allen Betriebsbedingungen im wesentlichen formsteif sind.

Der durch plastische Ziehverformung aus dem Grundkörper 9 zunächst in der Achse 11 zylindrisch herausgeformte Anschlußflansch 10 begrenzt mit einem über den Umfang geschlossenen und gegenüber den anschließenden Abschnitten des Grundkörpers 9 dünneren Flanschmantel 15 eine Anschlußöffnung 14, die zumindest für die Anschlußabschnitte 7, 8 den einzigen Durchbruch durch den Grundkörper 9 bildet. Mit einem an den Grundkörper 9 anschließenden bzw. im Abstand von diesem liegenden Teilabschnitt bildet der Flanschmantel 15 zwei jeweils über den Umfang vollständig geschlossene, nur spaltartig beabstandete gesonderte Hülsen 16, 17 zur radialspielfreien Aufnahme der Anschlußabschnitte 7, 8, weshalb diese beiden Hülsen 16, 17 entsprechend unterschiedliche Innen-bzw. Außenweiten haben.

Der Flanschmantel 15 bildet desweiteren ein die Hülsen 16, 17 zwischen den Anschlußabschnitten 7, 8 verbindendes Zwischen- bzw. Distanzglied 18, das dadurch hergestellt ist, daß der Flanschmantel 15 unter Bildung axialer Kerben 19 an der Außenseite über seine gesamte Dicke nach innen geformt ist. Alle Achsen 11 bis 13 liegen wie das Distanzglied 18 etwa in einer gemeinsamen Axialebene 20, in welcher die beiden einander gegenüberliegenden Mantelteile des Distanzgliedes 18 im wesentlichen ganz- und ebenflächig nahezu aneinander anliegen, und zwar jeweils durchgehend bis zum Außenumfang des jeweiligen Anschlußabschnittes 7 bzw. 8. Dadurch ist der Innenbereich des Flanschmantels 15 im Bereich der Hülsen 16, 17 und des Distanzgliedes 18 von Hohlräumen im wesentlichen völlig frei und die Spalte zwischen den aneinander anliegenden gekrümmten bzw. ebenen Flächen sind mit einem innig an ihnen haftenden Lötmittel verfüllt.

Jeder der genannten Bauteile besteht zweckmäßig aus einem metallischen Werkstoff, z.B. Stahl, wie rostfreiem Stahl. Der die Hülsen 16, 17 bildende Längsabschnitt 21 des Anschlußflansches 10 reicht wie diese Hülsen bis zum zugehörigen äußeren Ende 23 bzw. der dadurch gebildeten Endfläche, die über den Umfang der jeweiligen Hülse 16, 17 etwa in einer Ebene bzw. rechtwinklig zur jeweiligen Achse 11 bis 13 liegen kann. Die Achsen 11 bis 13 können auch nicht parallel zueinander bzw. in gesonderten Axialebenen liegen. Der Flanschmantel 15 steht im wesentlichen ausschließlich über die äußere Stirnfläche 25 des Grundkörpers 9 um ein Maß vor, das etwa seiner größten, parallel zur Axialebene 20 zu messenden Außenweite entspricht. Mit der inneren, ebenfalls im wesentlichen ebenen Stirnfläche 26 des Grundkörpers 9 schließt das innere Ende 24 des Flanschmantels 15 im wesentlichen bündig ab, wobei der Innenumfang und der Außenumfang des Flanschmantels 15 im Axialschnitt viertelkreisförmig abgerundet in die Stirnflächen 25, 26 übergehen.

Der Längsabschnitt 21 bzw. die Hülsen 16, 17 liegen in einem Abstand von der äußeren Stirnfläche 25, können jedoch gegenüber der Hälfte der Gesamtlänge des Anschlußflansches 10 bzw. gegenüber dem anschließenden Längsabschnitt 22 länger sein. Dieser, an den Grundkörper 9 anschließende Längsabschnitt 22 hat einen im wesentlichen zylindrischen Außen- bzw. Innenumfang, wobei seine Außen- bzw. Innenweite der entsprechenden größten Weite des Längsabschnittes 21 etwa gleich ist. Zwischen den Längsabschnitten 21, 22 bildet der Flanschmantel 15 einen stetig gekrümmten Übergangsabschnitt, dessen Anschluß an den Längsabschnitt 22 etwa in der Ebene der Stirnfläche 25 liegen kann, so daß die konstanten Querschnitte des Längsabschnittes 22 auf einer Länge vorgesehen sind, die nur etwa der Plattendicke des Grundkörpers 9 entspricht.

In diesem Übergangsbereich divergieren die im Längsabschnitt 21 aneinanderliegenden Flächen der beiden Lagen des Distanzgliedes 18, so daß hier die Tiefe der jeweiligen Kerben 19 stetig abnimmt und deren Bodenfläche im Axialschnitt bogen-bzw. S-förmig geschwungen in den Außenumfang des Längsabschnittes 22 übergeht. Im Bereich des Längsabschnittes 21 haben die Hülsen 16, 17 wie auch die Anschlußabschnitte 7, 8 jeweils über ihre gesamte Länge durchgehend konstante Innen-bzw. Außenquerschnitte, wobei diese Außenquerschnitte der Anschlußabschnitte 7, 8 bis an deren innere Enden durchgehen bzw. nicht erweitert sind. Das innere Ende der Leitung 6 kann eine zu seiner Achse 13 schräge Endfläche aufweisen.

Die Außenumfänge der beiden Anschlußabschnitte 7, 8 liegen in einem Spaltabstand voneinander, der etwa in der Größenordnung des Außendurchmessers bzw. des Radius' des Anschlußabschnittes 7 und/oder des zwei- bis vierfachen der Dicke des Flanschmantels 15 liegen kann, so daß sich ein Abstand in der Größenordnung von 1 mm oder darunter ergibt. Die im Bereich der größten Weite liegenden äußeren axialen Mantellinien des Flanschmantels 15 gehen von den Hülsen 16, 17 über den Übergangsabschnitt in den Längsabschnitt 22 im wesentlichen geradlinig durch, wobei die Kerben 19 in einer gemeinsamen, zur Axialebene 20 etwa rechtwinkligen axialen Zwischenebene zwischen den Hülsen 16, 17 liegen und ihre nach außen divergierenden Flanken im Querschnitt unmittelbar durch die gekrümmten Außenumfangsflächen der Hülsen 16, 17 gebildet sind. Die Breite der Bodenflächen der Kerben 19 kann in der Größenordnung der Dicke des Flanschmantels 15 liegen, die ihrerseits in der Größenordnung der Wandungsdicke des Anschlußabschnittes 7 liegen bzw. kleiner als die Wandungsdicke des Anschlußabschnittes 8 sein kann.

Durch die beschriebene Ausbildung bildet der Längsabschnitt 21 des Flanschmantels 15 etwa beiderseits der Axialebene 20 jeweils zwei doppelschalige Abschnitte mit jeweils zwei über einen Axialsteg verbundenen Halbschalen, die im Bereich der voneinander abgekehrten Außenseiten der Anschlußabschnitte 7, 8 einteilig ineinander übergehen und zwischen den Anschlußabschnitten 7, 8 aneinander anliegend über ein Haft-, wie ein Lotmittel miteinander verbunden sind. Je nach den Erfordernissen kann stattdessen auch eine Klebung, Schweißung oder eine reibungsschlüssige Preßverbindung vorgesehen sein. Ferner ist es denkbar, mindestens eine der Leitungen, insbesondere die Leitung 6 einteilig mit dem Anschlußflansch 10 auszubilden, so daß dieser mit einem über die Endfläche 23 vorstehenden Anschluß die Befüllöffnung bildet. In jedem Fall kann im Bereich des Längsabschnittes 21 der Anschlußflansch 10 im Querschnitt 8- bzw. brillenförmig ausgebildet sein, wobei der engste, durch die Bodenflächen der Kerben 19 gebildete Einschnürungsbereich eine Dicke aufweist, der kleiner als die Außenweite des dünnsten Anschlußabschnittes 7 ist.

Im Übergangsbereich zwischen Außenumfang des Flanschmantel 15 und zugehöriger Stirnfläche 25 bildet letztere eine insbesondere ringförmige und etwa in der Achse 11 liegende, gegebenenfalls durch Prägung hergestellte Vertiefung, die unmittelbar an den Außenumfang des Längsabschnittes 22 anschließt und eine gegenüber dessen Wandungsdicke etwa gleiche geringste Breite aufweist. An ihrer vom Anschlußflansch 10 entfernten Seite ist die Vertiefung 27 von einer über die Stirnfläche 25 vorstehenden, gegebenenfalls ringförmigen Flanke begrenzt, die zweckmäßig durch den Innenumfang einer bogen- bzw. ringförmigen Rippe 28 gebildet ist, von deren Außenumfang etwa gleichmäßig um die Achse 11 verteilte Rippen 29 sternförmig nach außen ausgehen. Dadurch ergibt sich bei leichter Bauweise eine wesentliche Verstärkung des Grundkörpers 9 gegen Durchbiegungen im Bereich des Anschlußflansches 10 und daher gegen Materialermüdungen durch Wechsel-Biegeverformungen aufgrund z.B. von Druckwechseln.

An der Außenseite der Einheit 3 ist für den ansonsten unabgestützten Teil der Leitung 5 bzw. den durch diese gebildeten Zugstrang eine Halterung 30 vorgesehen, welche die Leitung 5 im axialen Abstand von Ende 23 des Anschlußflansches 10 lagesichert. In einem etwa dem 30 bis 70-fachen, insbesondere dem 50 bis 60-fachen der Außenweite der Leitung 5 entsprechenden Abstand vom Grundkörper 9 ist die Leitung 6 mit einem einteilig mit ihr ausgebildeten Verschluß 31 dadurch verschlossen, daß ihr Rohrmantel über einen etwa dem 5 bis 10-fachen ihrer Außenweite entsprechenden Längsabschnitt so flachgedrückt ist, daß sie mit Abstand zwischen den Enden dieses Längsabschnittes durch Punktschweißung einen demgegenüber verbreiterten Flachkopf 32 mit konvex gekrümmten Außenkanten bildet, die in etwa gradlinige Längskanten des flachgedrückten Längsabschnittes übergehen. Dieser Längsabschnitt reicht bis zum freien Ende 33 der Leitung 6.

Im Abstand vom Anschlußflansch 10 ist die Leitung 5 mit mindestens einer bzw. zwei, drei oder mehr Steilwindungen um den zwischen dem Verschluß 31 bzw. dem Kopf 32 und dem Anschlußflansch 10 liegenden Längsabschnitt der annähernd geradlinig stabförmigen Leitung 6 verhältnismäßig eng anliegend gewunden, wobei die Windungssteigung etwa dem 5 bis 30-fachen bzw. dem 10 bis 20-fachen der Außenweite der Leitung 5 oder der entsprechenden Hälfte der Außenweite der Leitung 6 entsprechen kann. Außerhalb der Halterung 30 am freien Längsabschnitt der Leitung 6 angreifende Zugkräfte führen zu einem elastischen Verengung der Windungen 34 und/oder zum Anschlag der letzten Windung 34 an den durch die erweiterten Außenkanten des Kopfes 32 gebildeten Schultern, so daß sich eine sehr wirksame formschlüssige, jedoch elastisch nachgiebige un selbstverstärkende Zugsicherung für die Leitung 5 und daher auch für den Leitungsanschluß 1 ergibt.

Die Einheit 3 weist hier außer dem Grundkörper 9 nur noch eine einteilige Kappe 35 auf, die mit dem Kappenrand 36 ihres Mantels in eine innerhalb des Außenumfanges in der Stirnfläche 26 vorgesehene Ringnut 37 eingesetzt und durch eine der genannten Befestigungsarten abgedichtet befestigt ist. Die Wandungsdicke der Kappe 35 ist kleiner als die des Grundkörpers 9, wobei ihr Anschluß an den Grundkörper 9 radial weit außerhalb des Außenumfanges des Anschlußflansches 10 liegen kann. Die Einheit 4 bildet eine Membrandose bzw. ein Stellglied, deren spaltartig enge Membrankammer 38 über einen Anschlußnippel 40 an das zugehörige Ende der Leitung 5 anschlossen ist und zum druckdicht nach außen abgedichteten Raum des Drucksystems gehört. An der vom Anschlußnippel 40 abgekehrten Stirnseite weist die Membrandose einen Stellnocken 39 auf, der die axialen Wölbungsbewegungen der zugehörigen Stirnwand über einen federnden Schaltarm oder dergleichen bzw. auf eine Schalteinrichtung, wie einen Schnappschalter, überträgt.

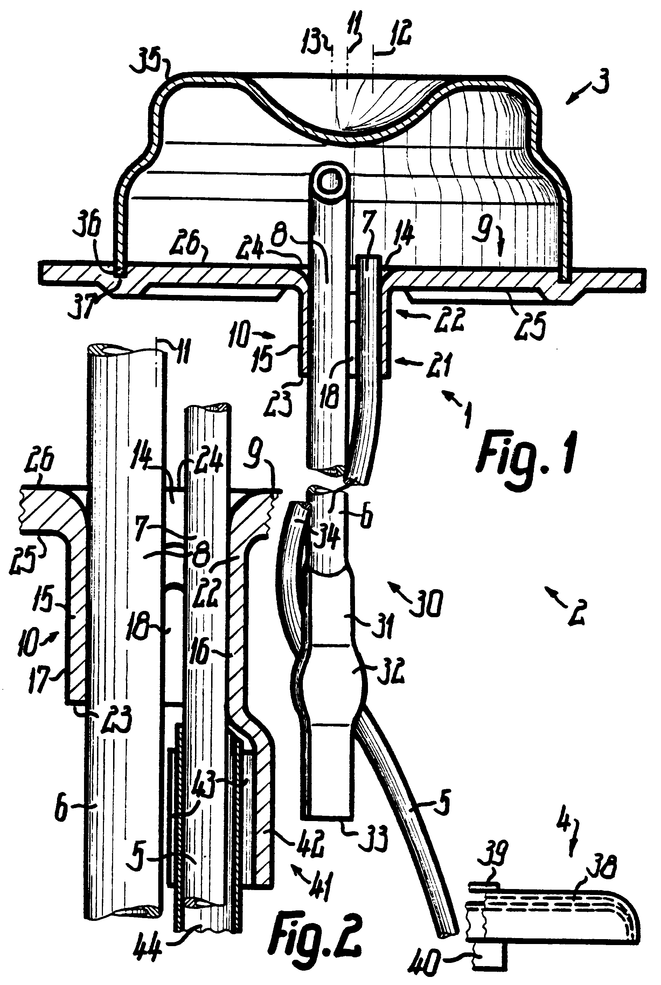

Gemäß Figur 2 weist der Anschlußflansch 10 einen über die ansonsten im wesentlichen in einer Querebene liegende Endfläche 23 vorstehende Sicherung 41 auf, die den über die Hülse 16 vorstehenden Bereich der Leitung 5 schützt, abschirmt, zentriert, gegen Knickung sichert oder dergleichen und/oder entsprechende Funktionen für einen weiteren Bauteil 24, z.B. einen aus einem Geflecht bestehenden flexiblen und elektrisch isolierenden Schutzschlauch 44 übernimmt, der auf die Leitung 5 aufgeschoben ist und vom Leitungsanschluß 1 bis zum Anschluß an der Einheit 4 reichen kann, so daß er gegenüber der Leitung 5 gegen Verschieben im wesentlichen formschlüssig gesichert ist. Die Sicherung 41 weist einen über das Ende 23 vorstehenden Vorsprung bzw. Arm 42 auf, der z.B. im Querschnitt U-förmig ist, so daß er zwei quer von ihm abstehende und beiderseits der Leitung 5 einander gegenüberliegende plattenförmige Seitenteile 43 sowie zwischen diesen eine zur Leitung 6 offene Öffnung bildet, die im wesentlichen bzw. mit einem gegenüber der Weite der Leitung 5 oder des Bauteiles 44 kleineren Spaltabstand durch die benachbart zu ihr liegende Leitung 6 verschlossen ist. Der die Leitung 5 mit geringem Radialspiel umgebende Schlauch 44 kann annähernd bis zur Endfläche 23 der Hülse 16 reichen, von dem die Seitenteile 43 einen geringen Axialabstand haben, so daß die Leitung 5 ab der Hülse 16 im wesentlichen lückenlos ummantelt ist und das zugehörige Ende des Bauteils 44 abgedichtet bzw. verschlossen ist.

Zur Herstellung des Leitungsanschlußes 1 wird erfindungsgemäß zunächst z.B. nach Art einer Münzprägung aus einem plattenförmigen Rohling für den Grundkörper unter Herstellung des Durchbruches der Rippen, Nuten oder dergleichen der Flanschmantel 15 in seinen Ausgangszustand herausgezogen. Dann werden die beiden Anschlußabschnitte 7, 8 von außen in den durchgehend zylindrischen Flanschmantel eingesteckt, wobei eine radiale Lagesicherung nicht unbedingt erforderlich ist. Mit zwei einander gegenüberliegenden und gegeneinander bewegbaren Profil-Prägewerkzeugen wird dann der Flanschmantel zur Bildung der die Kerben 19 aufweisenden Einschnürung bzw. des Distanzgliedes 18 verformt. Dabei werden die beiden Anschlußabschnitte 7, 8 auseinandergedrückt und unter Pressung gegen die voneinander abgekehrten Bereiche der Innenseite des Flanschmantels gedrückt, weil ihre im Bereich der Einschnürung einander gegenüberliegenden Umfangsbereiche im Querschnitt trichterartig Schrägflanken bilden. Gleichzeitig wird der Innenumfang des Flanschmantels eng an die Außenumfänge der Anschlußabschnitte 7, 8 angelegt. Eine vor dem Einsetzen der Anschlußabschnitte 7, 8 aufgebrachte Lötpaste wird anschließend durch Erwärmung im Lötofen flüssig bzw. kriechfähig gemacht und erstarrt dann durch Abkühlung, so daß sich ein völlig druckdichter Leitungsanschluß ergibt. In entsprechender Weise kann auch die Leitung 5 an der Einheit 4 angeschlossen werden, wonach alle Hohlräume des Drucksystemes lückenlos mit thermisch ausdehnungsaktiver Hydraulikflüssigkeit gefüllt sind und Flüssigkeitsausdehnungen in der formstabilen Einheit 3 zu Membranverformungen der Einheit 4 führen.

Alle beschriebenen Anordnungen, Bauteile usw. können jeweils nur ein einziges Mal oder in einer Mehrzahl von zwei oder mehr vorgesehen sein, z.B. um mehrere Baugruppen 2 oder Einheiten 3 bzw. 4 zu einer Baueinheit zusammenzufassen. Die erläuterten Eigenschaften bzw. Maße können je nach den Erfordernissen jeweils genau, im wesentlichen bzw. ungefähr wie beschrieben oder wesentlich davon abweichend vorgesehen sein.

## Patentansprüche

1. Leitungsanschluß mit einer Leitungsanordnung (5, 6), die mindestens einen Anschlußabschnitt (7) einer Kapillarrohr-Leitung (5), insbesondere eines im wesentlichen geschlossenen Drucksystems, und einen weiteren Anschlußabschnitt (8) aufweist sowie mit wenigstens einem Grundkörper (9), der in einer gemeinsamen Anschlußzone mindestens einen Anschlußflansch (10) mit einem Flanschmantel (15) und einem von diesem begrenzten Durchbruch (14) durch den Grundkörper (9) bildet, wobei an dem Flanschmantel (15) die Anschlußabschnitte (7, 8) befestigt sind, dadurch gekennzeichnet, daß zwischen den Anschlußabschnitten (7, 8) der Leitungsanordnung (5, 6) ein Zwischenglied (18) vorgesehen ist.

2. Leitungsanschluß nach Anspruch 1, dadurch gekennzeichnet, daß der Anschlußflansch (10) gesonderte Anschlußöffnungen für wenigstens zwei Anschlußabschnitte (7, 8) der Leitungsanordnung (5, 6) bildet, zwischen den Anschlußöffnungen das Zwischenglied (18) vorgesehen ist und dieses Zwischenglied (18) zwei nahezu aneinander liegende Zwischengliedflächen aufweist, daß insbesondere der Flanschmantel im wesentlichen konstante Manteldicke aufweist, mindestens einen der Anschlußabschnitte (7, 8) am Außenumfang umfaßt und unter Bildung des Zwischengliedes (18) im Querschnitt einteilig über die Anschlußabschnitte (7, 8) im wesentlichen geschlossen durchgeht und daß vorzugsweise die Anschlußabschnitte (7, 8) im Abstand voneinander bzw. parallel zueinander liegen.

3. Leitungsanschluß nach Anspruch 1 oder 2, dadurch gekennzeichnet, daß mindestens ein bis alle Anschlußabschnitte (7, 8) in einem Vormontage-Zustand über eine in wenigstens einer Richtung im wesentlichen radialspielfreie Zentrierverbindung in den Anschlußflansch (10) eingreifen, daß insbesondere mindestens ein Anschlußabschnitt (7, 8) mit einem Sicherungs- bzw. Dichtungsmaterial axial gegenüber dem Anschlußflansch (10) gesichert ist und daß vorzugsweise zwischen benachbarten Anschlußabschnitten (7, 8) eine Verbindung aus einem Sicherungs-bzw. Dichtmaterial vorgesehen ist.

4. Leitungsanschluß nach einem der vorhergehenden Ansprüche, dadurch gekennzeichnet, daß mindestens ein Anschlußabschnitt (7, 8) haftend mit dem Anschlußflansch (10) verbunden ist, daß insbesondere wenigstens ein Anschlußabschnitt (7, 8) über einen vom Anschlußflansch (10) bzw. vom Anschlußabschnitt (7, 8) gesonderten Haftstoff befestigt ist und daß vorzugsweise mindestens ein Anschlußabschnitt (7, 8) über eine erstarrte Schmelzverbindung mit einem Anschlußflansch verbunden ist.

5. Leitungsanschluß nach einem der vorhergehenden Ansprüche, dadurch gekennzeichnet, daß benachbarte Anschlußabschnitte (7, 8) einen lichten Abstand voneinander haben, der etwa in der Größenordnung der inneren Weite eines Anschlußabschnittes (7), der Wandungsdicke eines Anschlußabschnittes (8) und/oder des doppelten einer Wandungsdicke des Anschlußflansches (10) liegt, daß insbesondere benachbarte Anschlußabschnitte (7, 8) im Querschnitt jeweils auf Teilumfängen von wenigstens einem Schellenabschnitt umfaßt sind, der für zwei Anschlußabschnitte (7, 8) im Abstand zueinander liegende Schalenabschnitte bildet bzw. zwischen zwei Anschlußabschnitte (7, 8) eingreift und daß vorzugsweise zwei einander gegenüberliegende Schellenabschnitte im Querschnitt im Bereich des Zwischengliedes (18) sowie einer zwischen ihnen liegenden Ebene (20) geteilt sind und einteilig ineinander übergehen.

6. Leitungsanschluß nach einem der vorhergehenden Ansprüche, dadurch gekennzeichnet, daß im Querschnitt ein zwischen benachbarten Anschlußabschnitten (7, 8) im Bereich des Zwischengliedes (18) liegender Raumbereich im wesentlichen lückenfrei mit einem Feststoff ausgefüllt ist, daß insbesondere das vom Anschlußabschnitt (7, 8) gesonderte Zwischenglied (18) 2- bis 3-schichtig ist und daß vorzugsweise einander gegenüberliegende Mantelabschnitte des Anschlußflansches (10) zwischen den benachbarten Anschlußabschnitten (7, 8) im wesentlichen ganzflächig annähernd aneinander anliegen bzw. unmittelbar aneinander befestigt sind.

7. Leitungsanschluß nach einem der vorhergehenden Ansprüche, dadurch gekennzeichnet, daß der Anschlußflansch (10) zwischen benachbarten Anschlußabschnitten (7, 8) eine Kerbe (19) mit einer minimalen Kerbenweite bildet, die kleiner als die Wandungsdicke eines der Anschlußabschnitte (7, 8) bzw. des Anschlußflansches (10) ist, daß insbesondere der gegenseitige Bodenabstand zweier einander gegenüberliegender Kerben (19) kleiner als die Außenweite eines der Anschlußabschnitte (7) ist und daß vorzugsweise das Materialgefüge des Anschlußflansches (10) zwischen den benachbarten Anschlußabschnitten (7, 8) gegenüber im Abstand davon liegenden Bereichen verdichet ist.

8. Leitungsanschluß nach einem der vorhergehenden Ansprüche, dadurch gekennzeichnet, daß der Anschlußflansch (10) Längsabschnitte (21, 22) unterschiedlicher Querschnitte aufweist, daß insbesondere unterschiedliche Längsabschnitte (21, 22) des Anschlußflansches (10) stetig gekrümmt ineinander übergehen und die Zwischengliedflächen im Übergangsbereich divergieren und daß vorzugsweise ein an den Grundkörper (9) anschließender Längsabschnitt (22) des Anschlußflansches (10) im wesentlichen zentrisch-symmetrische Querschnitte aufweist.

9. Leitungsanschluß nach einer der vorhergehenden Ansprüche, dadurch gekennzeichnet, daß ein im wesentlichen zentrisch symmetrischer bzw. erweiterter Ausgangsquerschnitt des Anschlußflansches (10) eine lichte Weite hat, die der Summe der Außenweiten der zugehörigen Anschlußabschnitte (7, 8) zuzüglich deren Zwischenabstand entspricht, daß insbesondere ein Ende (24) des Anschlußflansches (10) im Querschnitt im wesentlichen zylindrisch und ein davon abgekehrtes Ende (23) im wesentlichen brillenförmig ist und daß vorzugsweise der Anschlußflansch (10) eine gegenüber dem doppelten einer Außenweite eines der Anschlußabschnitte (8) bzw. gegenüber seiner größten Außenweite etwa gleich große Länge hat.

10. Leitungsanschluß nach einem der vorhergehenden Ansprüche, dadurch gekennzeichnet, daß der Anschlußflansch (10) Anschlußabschnitte (7, 8) unterschiedlicher Außen- bzw. Innenweite aufnimmt, daß insbesondere die Innenweite eines der Anschlußabschnitte (8) etwa der Außenweite eines weiteren Anschlußabschnittes (7) bzw. die Außenweite eines der Anschlußabschnitte (8) etwa dem doppelten der Außenweite eines weiteren Anschlußabschnittes (7) entspricht und daß vorzugsweise einer der Anschlußabschnitte (7) durch das Ende der eine Fernleitung bildenden Kapillarrohr-Leitung (5) bzw. einer der Anschlußabschnitte (8) durch das Ende einer frei vorstehenden Füllrohr-Leitung (6) gebildet ist, die außerhalb des Anschlußflansches (10) mit einem Verschluß (31) versehen ist.

11. Leitungsanschluß nach einem der vorhergehenden Ansprüche, dadurch gekennzeichnet, daß mindestens einer der Anschlußabschnitte (7, 8) eine innere Prägeform für den Anschlußflansch (10) bildet, daß insbesondere der Anschlußflansch (10) asymmetrisch um die Anschlußabschnitte (7, 8) gebogen ist und daß vorzugsweise der Anschlußflansch (10) aus einer im wesentlichen nur in Mantellinienberührung mit dem jeweiligen Anschlußabschnitt (7, 8) stehenden Vormontage-Lage im wesentlichen durch Kraftangriff radial benachbart zum Anschlußabschnitt (7, 8) um diesen verformt ist.

12. Leitungsanschluß nach einem der vorhergehenden Ansprüche, dadurch gekennzeichnet, daß der Anschlußflansch (10) an eine quer zu mindestens einer Flanschachse (11 bis 13) liegende Wandung (9) anschließt, daß insbesondere der Anschlußflansch (10) wenigstens teilweise einteilig mit der plattenförmigen Wandung (9) ausgebildet ist und daß vorzugsweise der Anschlußflansch (10) eine gegenüber der Wandung (9) kleinere Wandungsdicke aufweist bzw. an einer Wandungs-Stirnseite (25) von einer unmittelbar entlang seines Außenumfanges anschließenden Vertiefung (27) bzw. von einer Ringrippe (28) umgeben ist.

13. Leitungsanschluß nach einem der vorhergehenden Ansprüche, dadurch gekennzeichnet, daß der Grundkörper (9) mindestens eine im Abstand vom Anschlußflansch (10) liegende Halterung (30) für wenigstens eine Leitung der Leitungsanordnung (5, 6) trägt, daß insbesondere die Halterung (30) vom Anschlußflansch (10) stabförmig nach außen vorstehend ausgeht und daß vorzugsweise eine Leitung (5) im Abstand vom Anschlußflansch (10) durch steilwendelförmige Umwicklung oder dergleichen gegenüber einer weiteren Leitung (6) festgelegt ist bzw. mindestens ein Anschlußabschnitt (7, 8) über beide Enden (23, 24) des Anschlußflansches (10) vorsteht.

14. Leitungsanschluß nach einem der vorhergehenden Ansprüche, dadurch gekennzeichnet, daß der Grundkörper (9) mindestens eine Sicherung (41) für wenigstens einen von den Anschlußabschnitten (7, 8) gesonderten Bauteil (44) bzw. für eine freiliegende Leitung (5) trägt, daß insbesondere eine Sicherung (41) eine Abschirmung für ein Ende eines auf die Leitung (5) aufgeschobenen Schutzgliedes (44) bildet und daß vorzugsweise an eine äußere Endfläche (23) des Anschlußflansches (10) ein frei vorstehendes Sicherungsglied einteilig anschließt, dessen Innenfläche wenigstens teilweise im Abstand vom Außenumfang mindestens einer zugehörigen Leitung (5) liegt bzw. eine Steckaufnahme für das als Schutzmantel ausgebildete Schutzglied (44) trägt.

15. Leitungsanschluß nach einem der vorhergehenden Ansprüche, dadurch gekennzeichnet, daß der Grundkörper (9) mindestens eine Wandung einer Druckdose oder dergleichen bildet, daß insbesondere die Wandung für mindestens zwei Leitungseingänge nur mit dem einen Durchbruch (14) versehen sowie ringförmig und durchgehend einteilig ausgebildet ist und daß vorzugsweise mit dem Grundkörper (9) ein Stellglied des geschlossenen Drucksystemes im wesentlichen ausschließlich über mindestens eine Leitung (5) verbunden ist.

## Claims

1. A conduit terminal including a conduit arrangement (5, 6) comprising at least one terminal section (7) of a capillary conduit (5), more particularly of a substantially closed pressure system, and a further terminal section (8) as well as at least one base body (9) forming in a common terminal zone at least one terminal flange (10) with a flange shell (15) and a breakthrough (14) defined by the latter through the base body (9), the terminal sections (7, 8) being secured to the flange shell (15), characterized in that an adapter (18) is provided between the terminal sections (7, 8) of the conduit arrangement (5, 6).

2. The conduit terminal as set forth in claim 1, characterized in that the terminal flange (10) forms separate terminal ports for at least two terminal sections (7, 8) of the conduit arrangement (5, 6), the adapter (18) being provided between the terminal ports and the adapter (18) comprising two adapter surface areas almost in contact with each other, more particularly the flange shell (15) comprising a substantially constant shell thickness, comprising at least one of the terminal sections (7, 8) at the outer circumference and in forming the adapter (18) is substantially closed throughout in cross-section integrally via the terminal sections (7, 8), and preferably the terminal sections (7, 8) being located spaced away from each other or in parallel.

3. The conduit terminal as set forth in claim 1 or 2, characterized in that at least one up to all terminal sections (7, 8) in a preassembly condition engage the terminal flange (10) via a centering joint substantially with zero radial clearance in at least one direction, more particularly at least one terminal section (7,8) being locked in place by a locking/sealing material axially relative to the terminal flange (10) and preferably a joint of a locking/sealing material being provided between adjacent terminal sections (7, 8).

4. The conduit terminal as set forth in any of the preceding claims, characterized in that at least one terminal section (7, 8) is bondingly connected to the terminal flange (10), more particularly at least one terminal section (7, 8) being secured by a bonding agent separate from the terminal flange (10) or from the terminal section (7, 8) and preferably at least one terminal section (7, 8) being joined to a terminal flange via a solidified fusion joint.

5. The conduit terminal as set forth in any of the preceding claims, characterized in that adjacent terminal sections (7, 8) have a clear spacing from each other in the order of magnitude of the inner diameter of a terminal section (7), the wall thickness of a terminal section (8) and/or twice a wall thickness of the terminal flange (10), more particularly each of the adjacent terminal sections (7, 8) being surrounded cross-sectionally over partial circumfereces by at least one clamp section forming for two terminal sections (7, 8) shell sections located spaced away from each other or engaging between two terminal sections (7, 8) and preferably two opposing clamp sections being split in cross-section in the region of the adapter (18) as well as of a plane (20) located therebetween and translating into each other integrally.

6. The conduit terminal as set forth in any of the preceding claims, characterized in that cross-sectionally a zone located between adjacent terminal sections (7, 8) in the region of the adapter (18) is filled substantially gaplessly with a solid substance, more particularly the adapter (18) separate from the terminal section (7, 8) being 2 to 3-ply and preferably opposing shell sections of the terminal flange (10) between the adjacent terminal sections (7, 8) virtually adjoining each other substantially in full contact or directly secured to each other.

7. The conduit terminal as set forth in any of the preceding claims, characterized in that the terminal flange (10) forms between adjacent terminal sections (7, 8) a notch (19) having a minimum notch width which is smaller than the wall thickness of one of the terminal sections (7, 8) or of the terminal flange (10), more particularly the mutual bottom spacing of two opposing notches (19) being smaller than the outer diameter of the one of the terminal sections (7) and preferably the material joint of the terminal flange (10) between the adjacent terminal sections (7, 8) being sealed off from the portions located spaced away therefrom.

8. The conduit terminal as set forth in any of the preceding claims, characterized in that the terminal flange (10) comprises longitudinal sections (21, 22) differing in cross-section, more particularly differing longitudinal sections (21, 22) of the terminal flange (10) translating into each other continually curved and the adapter surface areas diverging in the transition portion and preferably a longitudinal section (22) of the terminal flange (10) adjoining the base body (9) comprising substantially central symmetrical cross-sections.

9. The conduit terminal as set forth in any of the preceding claims, characterized in that a substantially central symmetrical or expanded output cross-section of the terminal flange (10) has a clear diameter corresponding to the sum of the outer diameters of the corresponding terminal sections (7, 8) plus their intermediate spacing, more particulary one end (24) of the terminal flange (10) being cross-sectionally substantially cylindrical and one end (23) facing away therefrom having substantially a figure-of-eight configuration and preferably the terminal flange (10) having a length roughly the same as twice the outer diameter of one of the terminal sections (8) or its maximum outer diameter.

10. The conduit terminal as set forth in any of the preceding claims, characterized in that the terminal flange (10) accommodates terminal sections (7, 8) of differing outer or inner diameter, more particularly the inner diameter of one of the terminal sections (8) roughly corresponding to the outer diameter of a further terminal section (7) or the outer diameter of the one of the terminal sections (8) corresponding roughly to twice the outer diameter of a further terminal section (7) and preferably one of the terminal sections (7) being formed by the end of the capillary conduit (5) forming a remote conduit or one of the terminal sections (8) being formed by the end of a freely protruding filler tube conduit (6) provided outside of the terminal flange (10) with a closure (31).

11. The conduit terminal as set forth in any of the preceding claims, characterized in that at least one of the terminal sections (7, 8) forms an inner mold for coining the terminal flange (10), more particularly the terminal flange (10) being bent asymmetrically about the terminal sections (7, 8) and preferably the terminal flange (10) being formed from a preassembly ply substantially only in envelope contact with each terminal section (7, 8) about the terminal section (7, 8) substantially by a force acting radially adjacent to said terminal section (7, 8).

12. The conduit terminal as set forth in any of the preceding claims, characterized in that the terminal flange (10) adjoins a wall (9) located transversely to at least one flange axis (11 to 13), more particularly the terminal flange (10) being configured at least in part integrally with the disc-shaped wall (9) and preferably the terminal flange (10) comprising a wall thickness smaller than that of the wall (9) or at one wall face (25) is surrounded by a depression (27) or annular rib (28) directly adjoining along its outer circumference.

13. The conduit terminal as set forth in any of the preceding claims, characterized in that the base body (9) mounts at least one fixture (30) located spaced away from the terminal flange (10) for mounting at least one conduit of the conduit arrangement (5, 6), more particularly the fixture (30) protruding from the terminal flange (10) rod-shaped outwardly and preferably one conduit (5) being defined spaced away from the terminal flange (10) by a steep spiral coil or the like relative to the other conduit (6) or at least one terminal section (7, 8) protruding beyond both ends (23, 24) of the terminal flange (10).

14. The conduit terminal as set forth in any of the preceding claims, characterized in that the base body (9) mounts at least one locking fixture (41) for at least one component (44) separate from the terminal sections (7, 8) or for an exposed conduit (5), more particularly a locking fixture (41) forming a shield for one end of a protective member (44) mounted on the conduit (5) and preferably a freely protruding locking agent integrally adjoining one outer end surface area (23) of the terminal flange (10), the inner surface area of the locking agent being located at least in part spaced away from the outer circumference of at least one corresponding conduit (5) or mounting a socket for the protective member (44) configured as a protective sheath.

15. The conduit terminal as set forth in any of the preceding claims, characterized in that the base body (9) forms at least one wall of an aneroid or the like, more particularly the wall being provided with only one breakthrough (14) for at least two conduit inputs whilst being configured annular and integral throughout and preferably a final control element of the closed pressure system being connected to the base body (9) substantially exclusively via at least one conduit (5).

## Revendications

1. Raccord de conduits avec un agencement de conduits (5, 6), qui présente au moins une section de raccordement (7) d'un conduit capillaire (5), notamment d'un système sous pression essentiellement clos et une autre section de raccordement (8), ainsi qu'avec au moins un corps de base (9), qui forme dans un domaine de raccordement commun au moins une bride de raccordement (10) avec une enveloppe de bride (15) et un passage (14) délimité par celle-ci à travers le corps de base (9), les sections de raccordement (7, 8) étant fixées à l'enveloppe de bride (15), caractérisé en ce que entre les sections de raccordement (7, 8) de l'agencement de conduits (5, 6) est prévu un élément intermédiaire (18).

2. Raccord de conduits selon la revendication 1, caractérisé en ce que la bride de raccordement (10) forme des ouvertures de raccordement distinctes au moins pour deux sections de raccordement (7, 8) de l'agencement de conduits (5, 6), qu'entre les ouvertures de raccordement est prévu l'élément intermédiaire (18) et que cet élément intermédiaire (18) présente deux surfaces d'élément intermédiaire presque adjacentes l'une auprès de l'autre, en ce que notamment l'enveloppe de bride présente une épaisseur d'enveloppe essentiellement constante, qu'elle entoure au moins une des sections de raccordement (7, 8) à la circonférence extérieure et qu'elle s'étend de manière essentiellement close sous formation de l'élément intermédiaire (18) en une seule pièce vu en section transversale en passant par les sections de raccordement (7, 8) et en ce que de préférence les sections de raccordement (7, 8) sont situées avec un écart entr'elles ou encore de manière parallèle.

3. Raccord de conduits selon la revendication 1 ou 2, caractérisé en ce qu'au moins une jusqu'à toutes les sections de raccordement (7, 8) s'engagent dans un état de prémontage par une jonction centrante essentiellement sans jeu radial dans au moins une direction, dans la bride de raccordement (10), en ce que notamment au moins une section de raccordement (7, 8) est assurée par un matériau d'assurage ou encore d'étanchéité en direction axiale par rapport à la bride de raccordement (10) et en ce que de préférence entre des sections de raccordement (7, 8) limitrophes entr'elles est prévu un joint d'un matériau d'assurage ou encore d'étanchéité.

4. Raccord de conduits selon une des revendications précédentes, caractérisé en ce qu'au moins une section de raccordement (7, 8) est liée par adhérence à la bride de raccordement (10), en ce que notamment au moins une section de raccordement (7, 8) est fixée au moyen d'un adhésif distinct de la bride de raccordement (10) ou encore de la section de raccordement (7, 8) et en ce que de préférence au moins une section de raccordement (7, 8) est jointe au moyen d'une liaison fusible solidifiée à une bride de raccordement.

5. Raccord de conduits selon une des revendications précédentes, caractérisé en ce que des sections de raccordement (7, 8) limitrophes entr'elles présentent un écartement qui se trouve approximativement dans un ordre de grandeur de l'ampleur intérieure d'une section de raccordement (7), de l'épaisseur de paroi d'une section de raccordement (8) et/ou du double d'une épaisseur de paroi de la bride de raccordement (10), en ce que notamment des sections de raccordement (7, 8) limitrophes entr'elles sont entourées en section transversale respectivement sur des circonférences partielles par au moins une section de collier, qui forme pour deux sections de raccordement (7, 8) des sections de coque écartées entr'elles ou encore qui s'engage entre deux sections de raccordement (7, 8) et en ce que de préférence deux sections de collier opposées l'une à l'autre sont divisées en section transversale dans le domaine de l'élément intermédiaire (18) ainsi que dans un plan (20) situé entr'elles et qui passent de l'une à l'autre en une seule pièce.

6. Raccord de conduits selon une des revendications précédentes, caractérisé en ce qu'en section transversale un domaine spatial, situé entre des sections de raccordement (7, 8) limitrophes entr'elles dans le domaine de l'élément intermédiaire (18), est rempli essentiellement sans interstices d'une matière solide, en ce que notamment l'élément intermédiaire (18) distinct de la section de raccordement (7, 8) se présente en 2 jusqu'à 3 couches et en ce que de préférence des sections d'enveloppe opposées l'une à l'autre de la bride de raccordement (10) sont approximativement adjacentes l'une à l'autre essentiellement sur toute leur surface ou encore elles sont directement fixées l'une à l'autre entre les sections de raccordement (7, 8) limitrophes entr'elles.

7. Raccord de conduits selon une des revendications précédentes, caractérisé en ce que la bride de raccordement (10) forme entre des sections de raccordement (7, 8) limitrophes entr'elles une encoche (19) présentant une ampleur d'encoche minimale, laquelle est plus petite que l'épaisseur de paroi d'une des sections de raccordement (7, 8) ou encore de la bride de raccordement (10), en ce que notamment l'écartement réciproque des fonds de deux encoches (19) opposées l'une à l'autre est plus petit que l'ampleur extérieure d'une des sections de raccordement (7) et en ce que de préférence la structure de matériau de la bride de raccordement (10) est densifiée entre les sections de raccordement (7, 8) limitrophes entr'elles par rapport à des domaines écartés de cela.

8. Raccord de conduits selon une des revendications précédentes, caractérisé en ce que la bride de raccordement (10) présente des sections longitudinales (21, 22) de sections transversales différentes, en ce que notamment des sections longitudinales (21, 22) différentes de la bride de raccordement (10) passent de l'une à l'autre courbées de manière continue et que les surfaces d'élément intermédiaire divergent dans le domaine de transition et en ce que de préférence une section longitudinale (22), qui fait suite au corps de base (9), de la bride de raccordement (10) présente des sections transversales montrant essentiellement une symétrie ponctuelle.

9. Raccord de conduits selon une des revendications précédentes, caractérisé en ce qu'une section transversale de sortie de la bride de raccordement (10), montrant essentiellement une symétrie ponctuelle ou encore élargie, possède un diamètre intérieur correspondant à la somme des diamètres extérieurs des sections de raccordement (7, 8) correspondantes en plus de leur distance intermédiaire, en ce que notamment une extrémité (24) de la bride de raccordement (10) est essentiellement cylindrique en section transversale et une extrémité (23) opposée à celle-ci est essentiellement en forme de lunette et en ce que de préférence la bride de raccordement (10) a approximativement la même longueur par rapport au double d'une dimension extérieure d'une des sections de raccordement (8) ou encore par rapport à sa plus grande dimension extérieure.

10. Raccord de conduits selon une des revendications précédentes, caractérisé en ce que la bride de raccordement (10) loge des sections de raccordement (7, 8) de dimensions extérieures ou encore intérieures différentes, en ce que notamment la dimension intérieure d'une des sections de raccordement (8) correspond environ à la dimension extérieure d'une autre section de raccordement (7) ou encore que la dimension extérieure d'une des sections de raccordement (8) correspond environ au double de la dimension extérieure d'une autre section de raccordement (7) et en ce que de préférence une des sections de raccordement (7) est formée au moyen de l'extrémité du conduit capillaire (5) qui forme un conduit de transmission à grande distance ou encore que une des sections de raccordement (8) est formée par l'extrémité d'un conduit tubulaire de remplissage (6) librement saillant, lequel est muni à l'extérieur de la bride de raccordement (10) d'une fermeture (31).

11. Raccord de conduits selon une des revendications précédentes, caractérisé en ce qu'au moins une des sections de raccordement (7, 8) forme une forme de gaufrage intérieure pour la bride de raccordement (10), en ce que notamment la bride de raccordement (10) est incurvée de façon asymétrique autour des sections de raccordement (7, 8) et en ce que de préférence la bride de raccordement (10) est mise en forme essentiellement par application d'une force à proximité radiale de la section de raccordement (7, 8) autour de celle-ci à partir d'une situation de prémontage, présentant essentiellement un contact par la génératrice avec la respective section de raccordement (7, 8).

12. Raccord de conduits selon une des revendications précédentes, caractérisé en ce que la bride de raccordement (10) fait suite à une paroi (9) située transversalement par rapport au moins à un axe de bride (de 11 à 13), en ce que notamment la bride de raccordement (10) est réalisée au moins en partie en une seule pièce avec la paroi (9) en forme de plaque et en ce que de préférence la bride de raccordement (10) présente une épaisseur de paroi plus petite par rapport à la paroi (9) ou encore qu'elle est entourée par un creux (27) faisant suite directement le long de sa circonférence extérieure ou encore par une nervure annulaire (28).

13. Raccord de conduits selon une des revendications précédentes, caractérisé en ce que le corps de base (9) porte au moins un support (30) situé de manière écartée de la bride de raccordement (10) pour au moins un conduit de l'agencement de conduits (5, 6), en ce que notamment le support (30) prend son point de départ de la bride de raccordement (10) saillant en forme de tige vers l'extérieur et en ce que de préférence un conduit (5) est fixé de façon écartée de la bride de raccordement (10) par cordage en forme d'hélice à forte pente ou similaire par rapport à un autre conduit (6) ou encore qu'au moins une section de raccordement (7, 8) saille au-delà des deux extrémités (23, 24) de la bride de raccordement (10).

14. Raccord de conduits selon une des revendications précédentes, caractérisé en ce que le corps de base (9) porte au moins un moyen d'assurage (41) pour au moins un élément de construction (44) distinct des sections de raccordement (7, 8) ou encore pour un conduit (5) situé de manière libre, en ce que notamment un moyen d'assurage (41) forme un écran pour une extrémité d'un élément de protection (44), qui a été enfilé sur le conduit (5) et en ce que de préférence un élément d'assurage librement saillant fait suite en une seule pièce à une surface terminale extérieure (23) de la bride de raccordement (10), dont la surface intérieure se trouve au moins en partie écartée de la circonférence extérieure au moins d'un conduit (5) associé ou encore dont la surface intérieure porte un logement embrochable pour l'élément de protection (44) réalisé en tant que manteau de protection.

15. Raccord de conduits selon une des revendications précédentes, caractérisé en ce que le corps de base (9) forme au moins une paroi d'un récipient sous pression ou similaire, en ce que notamment la paroi est pourvue d'un seul passage (14) pour au moins deux entrées de conduit ainsi qu'elle est réalisée en forme annulaire et sans interruptions en une seule pièce et en ce que de préférence avec le corps de base (9) est joint un élément de réglage du système sous pression clos en substance exclusivement par au moins un conduit (5).
